Europäisches Patentamt

European Patent Office

Office européen des brevets

(11) Numéro de publication: **0 340 084 B1**

# FASCICULE DE BREVET EUROPEEN

(45) Date de publication de fascicule du brevet: **29.06.94**

(51) Int. Cl.⁵: **H01J 31/58**, H01J 31/50, G01T 1/28, G11C 11/30

(21) Numéro de dépôt: **89401124.6**

(22) Date de dépôt: **21.04.89**

(54) **Tube électronique pour la détection la mémorisation et la sélection d'images lumineuses.**

(30) Priorité: **27.04.88 FR 8805591**

(43) Date de publication de la demande:
**02.11.89 Bulletin 89/44**

(45) Mention de la délivrance du brevet:
**29.06.94 Bulletin 94/26**

(84) Etats contractants désignés:
**DE FR GB NL**

(56) Documents cités:
**GB-A- 1 215 297**
**US-A- 3 479 516**

**JOURNAL OF SCIENTIFIC INSTRUMENTS, vol. 43, no. 3, mars 1966, pages 153-159; J.D. McGEE et al.: "A dynamic electron image information store"**

**JOURNAL OF SCIENTIFIC INSTRUMENTS (JOURNAL OF PHYSICS E), séries 2, vol. 2, no. 1, janvier 1969, pages 41-44; B.L. MOR-GAN et al.: "A storage image tube for optoe-lectronic computing"**

(73) Titulaire: **THOMSON-CSF**
**173, Boulevard Haussmann**
**F-75008 Paris(FR)**

(72) Inventeur: **Guyot, Lucien**
**THOMSON-CSF**
**SCPI**
**F-92045 Paris la Defense Cedex 67(FR)**

(74) Mandataire: **Guérin, Michel et al**
**THOMSON-CSF**
**SCPI**
**B.P. 329**
**50, rue Jean-Pierre Timbaud**
**F-92402 Courbevoie Cédex (FR)**

## Description

L'invention concerne l'observation de phénomènes lumineux très rapides.

Pour l'observation de ces phénomènes, on utilise des caméras d'enregistrement ultra-rapides, adaptées à la fois à la cadence élevée des images à analyser et au flux lumineux disponible pour chaque image.

Si les phénomènes à analyser sont très rapides, les durées d'images deviennent très brèves et le flux lumineux de chaque image devient aussi très faible dans le cas général.

Il devient alors nécessaire d'introduire dans la chaîne d'analyse un ou plusieurs intensificateurs d'image; cela permet d'obtenir un signal de sortie suffisant, qui va soit vers un film photographique soit vers un analyseur d'image (tube de caméra de télévision ou dispositif à transfert de charges par exemple).

La difficulté qui se présente est la suivante: les images se succèdent très rapidement, à une cadence supérieure aux possibilités d'analyse des images à la sortie de la caméra. On cherche alors à sélectionner certaines images plus intéressantes que les autres et on concentre l'effort d'analyse sur ces images. Mais il faut pour cela pouvoir sélectionner très rapidement l'image intéressante parmi les images qui défilent à grande vitesse, et diriger l'image intéressante vers des moyens d'analyse, en éliminant les autres.

Pour illustrer concrètement le problème, on va donner un exemple chiffré dans un contexte où on veut analyser des images issues de la détection de collisions de particules accélérées dans un accélérateur d'études de physique nucléaire, les collisions étant visualisées par l'intermédiaire de scintilateurs.

Les images lumineuses sont observées dans plusieurs directions et on veut analyser des images avec une périodicité de 10 nanosecondes environ.

Toutefois, toutes les images n'ont pas besoin d'être enregistrées définitivement en vue d'une analyse très poussée; on ne pourrait d'ailleurs pas le faire compte tenu de la quantité d'information énorme que représente une image toutes les 10 nanosecondes, surtout si en pratique on enregistre simultanément un grand nombre d'images résultant de l'observation du phénomène dans un grand nombre de directions différentes.

Par conséquent on sélectionne pour les enregistrer les images intéressantes. Pour cela un ordinateur fournit une indication sur la nécessité d'analyser spécialement telle ou telle image; mais il ne peut pas fournir cette indication immédiatement; il la fournit par exemple avec un retard d'une microseconde.

Il est donc nécessaire de conserver en mémoire provisoirement une certaine d'images pour le cas où l'ordinateur indiquerait que l'une d'elles est intéressante et doit être enregistrée définitivement ou dirigée vers des moyens d'analyse.

On pourrait envisager de retarder d'une microseconde l'arrivée des images vers la caméra ou l'intensificateur d'image, de sorte qu'on pourrait recevoir de manière synchrone les images à intensifier et le signal indiquant que telle ou telle image est intéressante et doit être mémorisée en vue d'une analyse. Pour cela, on peut simplement prévoir, entre la production d'images lumineuses et la caméra, des fibres optiques de longueur suffisante pour retarder la transmission de l'image; le calcul montre que pour retarder les images d'une microseconde, il faut une longueur de fibre de 200 mètres au moins, ce qui pose des problèmes difficiles lorsqu'il y a des dizaines de milliers de fibres qui doivent subir le même retard.

L'autre idée qui vient à l'esprit est d'enregistrer systématiquement toutes les images qui arrivent pendant le délai d'une microseconde; au bout de ce délai on reçoit ou on ne reçoit pas de signal de validation indiquant qu'une image utile doit être analysée; si on reçoit ce signal, on conserve l'image utile et on élimine les autres; si on ne reçoit pas de signal de validation, les images sont éliminées et le système redevient disponible pour recevoir une nouvelle séquence d'images. Mais on ne sait pas enregistrer à très grande vitesse une grande quantité d'images : une centaine d'images à enregistrer avec une caméra pendant un délai d'une microseconde n'est pas à l'heure actuelle un chiffre réaliste.

On connaît d'après le brevet GB-A- 1 215 297 et d'après le Journal of Scientific Instruments vol. 43, n°3, mars 1966, pages 153-159; J.D. Mc Gee et al. : "A dynamic electron image information store", un procédé de stockage temporel d'images sous forme de paquets d'électrons dans un tube à vide.

La présente invention propose un nouveau procédé et un dispositif permettant de mémoriser une succession d'images arrivant à cadence élevée, pour ensuite sélectionner l'une de ces images en vue d'une analyse, et éliminer les autres. Ce procédé devrait permettre de recevoir des images successives à une cadence d'une toutes les 10 nanosecondes, de les conserver en mémoire pendant environ une microseconde, jusqu'à réception éventuelle d'un signal de sélection dans ce délai, d'éliminer régulièrement les images non sélectionnées et d'enregistrer l'image éventuellement sélectionnée. Ces chiffres sont donnés à titre indicatif.

Le procédé selon l'invention consiste fondamentalement :

- à focaliser les images lumineuses sur une photocathode à l'entrée d'un tube électronique de conversion d'image,

- à convertir les images lumineuses en images électroniques sous forme de paquets d'électrons se déplaçant dans le vide à l'intérieur du tube,
- à conférer à ces paquets d'électrons, par l'application d'un champ électrique accélérateur d'amplitude faible, une vitesse de déplacement connue très faible devant la vitesse de la lumière,
- à faire subir aux paquets d'électrons un trajet aller et retour dans le tube,
- à créer en une section du tube, à l'aide d'une électrode de sélection, un champ électrique contrôlé par un signal logique de sélection, ce champ ayant soit une première valeur pour laquelle les électrons sont repoussés par l'électrode vers l'intérieur du tube, soit une deuxième valeur pour laquelle les électrons peuvent passer à travers l'électrode, le signal logique de sélection étant produit en synchronisme avec l'arrivée d'un paquet d'électrons à sélectionner à proximité de l'électrode de sélection, l'instant d'arrivée étant lié à la vitesse de déplacement des paquets d'électrons,
- et enfin à produire à la sortie du tube une image électronique à l'aide de paquets d'électrons sélectionnés par le signal logique et à éliminer les paquets d'électrons non sélectionnés, caractérisé en ce que la sélection du paquet sélectionné est faite au cours du trajet retour des électrons, dans une région où les électrons destinés à former le paquet sont regroupés.

On utilise donc la propriété qu'ont les électrons, comme toute particule chargée électriquement, de pouvoir être accélérés plus ou moins selon l'amplitude du champ électrique dans lequel ils se déplacent, de sorte que le temps de transit d'une image sous forme d'un paquet d'électrons à l'intérieur du tube peut être ajusté à une valeur considérablement plus grande que le temps de transit de la lumière sur la même distance. Des faisceaux de fibres optiques de plusieurs dizaines ou centaines de mètres peuvent être remplacés par un tube de quelques dizaines de centimètres pour aboutir à un même retard de transmission et à une possibilité de sélection d'image.

L'électrode de sélection sera le plus souvent une grille transparente aux électrons mais elle peut être aussi une photocathode servant à produire les paquets d'électrons. C'est pourquoi on a adopté le terme générique "électrode".

On peut ainsi faire rentrer dans le tube à cadence élevée une succession d'images qui, transformées en paquets d'électrons, se déplaceront relativement lentement dans le vide à l'intérieur du tube; le temps de transit des images, qui est égal à l'intégrale de la vitesse des électrons sur la distance parcourue, peut être très supérieur à la période entre deux images successives, même avec une faible longueur de tube.

Par exemple, on peut s'arranger pour avoir un temps de transit de l'ordre de la microseconde avec un tube n'excédant pas une soixantaine de centimètres. Une centaine de paquets d'électrons espacés dans le temps d'une dizaine de nanosecondes et dans l'espace de quelques millimètres peuvent transiter simultanément dans le tube qui constitue ainsi une mémoire volatile stockant temporairement une centaine d'images en mouvement. Le fonctionnement est un peu analogue à celui d'un registre à décalage : le mouvement est continu et les images entrées les premières ressortent après un cycle de stackage, pendant que de nouvelles images entrent régulièrement.

Si une image intéressante doit être sélectionnée en vue d'une analyse, on dispose donc d'une microseconde pour donner l'ordre de sélection.

L'ordre est donné sous forme d'une commande logique de potentiel d'une grille de sélection; si un ordre est donné, le potentiel prend une première valeur; si aucun ordre n'est donné, le potentiel prend une deuxième valeur. Dans l'un des deux cas, le potentiel engendrera un champ électrique répulsif et les électrons suivront un trajet qui les fait revenir en arrière; dans l'autre cas, le potentiel autorisera le passage des électrons à travers la grille et les électrons suivront un autre trajet.

On verra que selon l'emplacement de la grille le potentiel peut être répulsif en présence d'un ordre de sélection. De toutes façons, l'un des trajets d'électrons aboutit finalement à un dispositif de sortie où le paquet d'électrons sélectionné vient former une image électronique que l'on peut analyser; l'autre trajet aboutit finalement à une électrode collectrice qui évacue les paquets d'électrons non sélectionnés.

Le dispositif de mémorisation temporaire et sélection d'images selon l'invention comporte donc un tube électronique comprenant:

- une section d'entrée permettant la conversion d'une image lumineuse en image électronique sous forme de paquets d'électrons;
- une section de stockage dans laquelle les champs électriques sont tels que les électrons se déplacent à une vitesse très faible devant la vitesse de la lumière;
- une électrode de sélection portée à un potentiel pouvant prendre une valeur ou une autre sous la commande d'un signal logique de sélection, l'une des valeurs de potentiel permettant de repousser les électrons arrivant vers l'électrode et l'autre valeur permettant aux électrons de passer à travers l'électrode de sélection;
- un moyen d'évacuation des paquets d'électrons non sélectionnés,
- une section de sortie avec un moyen de reconstitution d'une image électronique à partir d'un paquet d'électrons sélectionné,
- le signal logique de sélection étant appliqué avec un décalage temporel très précis par rapport à l'instant d'entrée d'une image à sélectionner, le décalage correspondant au temps de transit du paquet d'électrons de la section d'entrée à la section de stockage et dans la section de stockage jusqu'à proximité de l'électrode de sélection,

caractérisé en ce que l'électrode de sélection est placée du côté de la section d'entrée du tube pour permettre la sélection d'un paquet d'électrons sur son trajet de retour.

Dans l'art antérieur l'électrode de sélection est placée à l'extrémité du tube opposée à la section d'entrée; les électrons transitent alors sur toute la longueur du tube; à l'arrivée sur l'électrode (de préférence une grille) de sélection, ils sont réfléchis et renvoyés vers la section d'entrée qui sert aussi de moyen d'évacuation; mais si un signal de sélection est appliqué à la grille à un instant donné, le paquet d'électrons passe à travers la grille et vient former une image électronique sur la face de sortie; cette image peut être reconvertie en image lumineuse ou être directement enregistrée ou traitée sous forme électronique.

Toutefois, pour tenir compte du fait que dans un même paquet d'électrons émis lors de la conversion d'entrée les électrons individuels ont des énergies de valeurs dispersées, et donc pour tenir compte du fait que leurs vitesses de déplacement ne sont pas les mêmes en présence d'une même accélération, on préfère prévoir que le trajet des électrons comprend au moins un aller et retour dans le tube entre la section d'entrée et la grille de sélection.

Autrement dit, les électrons sont émis dans le tube lors de la conversion d'une image lumineuse en un paquet d'électrons; ce paquet est accéléré et il s'étale dans l'espace du fait des énergies de départ dispersées des électrons; il est initialement faiblement accéléré, puis il est ralenti dans un champ suffisamment décélérateur pour que les électrons s'arrêtent puis repartent en arrière vers la grille de sélection; au cours de ce trajet de retour, le paquet d'électrons étalé se regroupe; la grille de sélection est située dans une zone où les électrons sont regroupés au maximum. On évite ainsi les mélanges de paquets d'électrons correspondant à des images successives proches les unes des autres. Le choix de la valeur du champ décélérateur permet de régler le temps de freinage et de réaccélératin vers l'arrière des électrons; il influe sur la position de regroupement maximal des électrons d'énergies différentes.

Dans ce cas, la grille de sélection sera généralement située près de la section d'entrée du tube, le temps de transit des électrons étant le temps d'aller et retour dans le tube; la grille de sélection est alors commandée pour réfléchir vers l'avant les paquets d'électrons sélectionnés et pour laisser passer les paquets non sélectionnés. Les paquets sélectionnés refont un trajet vers l'avant jusqu'à une section de sortie opposée à la section d'entrée; là, une grille de sortie est portée temporairement à un potentiel qui permet de laisser passer le paquet sélectionné au lieu de le réfléchir vers l'arrière; le paquet peut alors former sur la face de sortie une image électronique ou lumineuse à analyser ou enregistrer; la grille de sortie peut d'ailleurs être constituée seulement par une électrode de la face de sortie.

Dans toute la description, on appelle direction "vers l'avant" la direction de la face d'entrée vers la face de sortie du tube, correspondant à un trajet "aller" des électrons; la direction "vers l'arrière" est la direction inverse, de la face de sortie vers la face d'entrée du tube; elle correspond au trajet de retour des électrons après qu'ils aient traversé une première fois le tube.

En pratique, on pourra prévoir que le moyen d'évacuation des paquets d'électrons non sélectionnés est constitué par le moyen de conversion d'images lumineuses en images électroniques, c'est-à-dire en pratique par une photocathode jouant alors simplement le rôle d'électrode collectrice : si une photocathode engendre les paquets d'électrons à partir d'une image lumineuse, cette photocathode peut aussi servir, lorsqu'on porte son potentiel à une valeur appropriée, d'électrode d'évacuation des paquets d'électrons ne correspondant pas à une image utile sélectionnée.

Dans ce cas il est souhaitable que le moyen de conversion d'image ne fonctionne pas en permanence; il est préférable de faire une conversion d'image d'entrée en image électronique à des moments ne coïncidant pas avec le retour des paquets d'électrons non sélectionnés. La durée du trajet aller et retour d'un paquet d'électrons entre la section d'entrée du tube et la section d'évacuation est donc choisie de telle sorte que les électrons reviennent sur l'électrode d'évacuation à un moment qui ne correspond pas à une conversion d'image lumineuse. La longueur du tube et les potentiels appliqués aux grilles d'accélération et décélération sont choisis en conséquence.

L'électrode de sélection peut dans certains cas être constituée par la photocathode elle-même plutôt qu'une grille placée devant la photocathode : si on porte temporairement le potentiel de la photocathode à une valeur suffisamment négative, elle sert de réflecteur aux électrons qui reviennent sur elle après un trajet aller-retour; elle permet donc de renvoyer vers l'avant un paquet sélectionné. Toutefois il faut alors prendre certaines précautions puisque la photocathode va alors émettre un paquet d'électrons représentant une nouvelle image (à moins qu'on n'ait interdit l'éclairement de la photocathode à cet instant).

D'autres caractéristiques et avantages de l'invention apparaîtront à la lecture de la description détaillée qui suit et qui est faite en référence aux dessins annexés dans lesquels:

- la figure 1 représente une vue schématique d'un dispositif de mémorisation temporaire et sélection d'images, dans le cas où le temps de transit des paquets d'électrons avant sélection correspond au temps de trajet aller des électrons de la face d'entrée à la face de sortie du tube, et non un trajet aller-retour comme dans le tube selon l'invention;
- la figure 2 représente schématiquement le trajet des paquets d'électrons dans le tube de la figure 1;
- la figure 3 représente une vue schématique d'un dispositif selon l'invention dans le cas où le temps de transit avant sélection correspond à un trajet aller-retour des paquets d'électrons dans le tube;
- la figure 4 représente schématiquement le trajet des paquets d'électrons dans le tube de la figure 3;
- la figure 5 représente une coupe d'un mode de réalisation détaillé du tube selon l'invention.

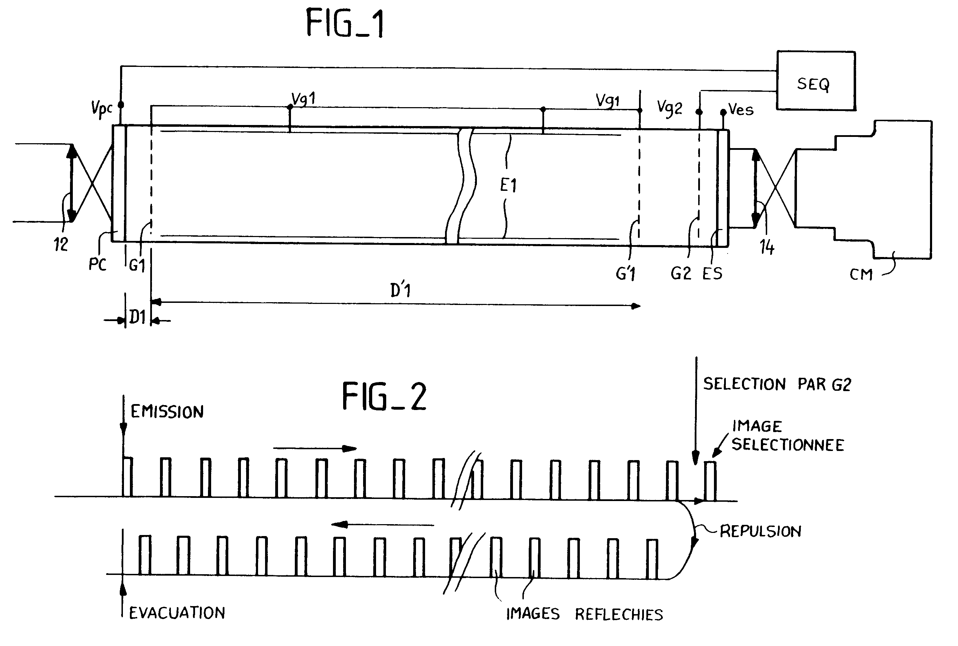

Sur la figure 1, on a représenté en coupe longitudinale schématique un tube électronique à vide permettant d'expliquer les principes de base sur lesquels se fondent la présente invention. Le cas de la figure 1 correspond au cas simple où le temps de stockage utile des paquets d'électrons ne correspond qu'à un aller simple et non un aller-retour comme dans le tube selon l'invention. Ici, seuls les paquets d'électrons non utiles effectuant le retour.

Ce tube électronique 10 est constitué à la manière d'un tube intensificateur d'images lumineuses, avec une face d'entrée qui est une photocathode PC sur laquelle on peut venir focaliser une image lumineuse à l'aide de moyens optiques quelconques symbolisés ici par une lentille optique 12.

Lorsque la photocathode est portée à un potentiel suffisamment négatif par rapport aux autres électrodes du tube, elle émet des électrons à partir de chaque point de sa surface. On prendra comme référence de potentiel nul le potentiel Vpc de la photocathode en phase d'émisssion d'un paquet d'électrons représentant une image.

Les électrons émis en chaque point de la surface sont d'autant plus nombreux que l'éclairement de ce point est plus intense. L'émission locale d'électrons est donc faite avec une densité représentant la densité lumineuse locale en ce point de l'image. De ce fait, un paquet d'électrons émis pendant un intervalle de temps donné représente sous forme électronique l'image lumineuse focalisée pendant cet intervalle de temps sur la photocathode. Ce paquet va se déplacer dans le tube en conservant l'information d'image qu'il représente. Il pourra restituer, s'il est sélectionné, cette information sur la face de sortie.

L'arrivée des images peut se faire de manière continue ou discontinue: la détection d'une image isolée consiste en une production par la photocathode d'un paquet d'électrons qui va se déplacer dans le tube. La détection de l'image suivante produira un autre paquet d'électrons, et ainsi de suite. Si l'image arrive de manière continue, on peut, par le choix du potentiel de la photocathode, interrompre ou autoriser la détection d'image. Dans les cas où les images arrivent de manière discontinue, il n'y a pas besoin d'agir sur le potentiel de la photocathode pour produire une succession discontinue d'images électroniques. Chaque image dure par exemple 2 à 3 nanosecondes pour une périodicité des images de 10 nanosecondes.

La face de sortie du tube est constituée par une couche cathodoluminescente ES ou plus généralement par une couche sensible aux électrons et capable de produire une image dont chaque point représente le nombre d'électrons incidents en ce point. Cette image est telle qu'elle puisse être photographiée par une caméra, ou alors analysée par des moyens électroniques: on peut imaginer par exemple que la face de sortie est une couche électrosensible d'un tube caméra ou d'un analyseur à l'état solide (dispositif à transfert de charges), de sorte que l'image électronique présente sur la face de sortie peut être convertie directement en un signal vidéo.

A proximité de la photocathode PC est placée une grille d'accélération G1; son potentiel est constant et égal à Vg1; la distance D1 entre la photocathode et la grille G1 est faible devant la longueur du tube et la différence entre le potentiel Vg1 de la grille G1 et le potentiel Vc de la photocathode est faible, par exemple de quelques volts.

Le champ accélérateur est donc faible dans cette zone dite zone d'accélération, et les électrons acquièrent une vitesse très faible devant celle de la lumière.

Au delà de la grille G1, on trouve une zone qu'on appellera zone de glissement, dans laquelle les électrons ne sont ni accélérés ni décélérés. Le potentiel dans cette zone est maintenu égal à Vg1 sur une distance D'1 qui peut constituer la majeure partie de la longueur restante du tube jusqu'à la face de sortie.

Le maintien du potentiel dans la zone de glissement est assuré par des électrodes périphériques E1 au potentiel Vg1, et par une grille G′1 qui termine la zone de glissement et qui est également au potentiel Vg1. Le champ électrique est donc nul et il n'y a pas d'accélération ou décélération des électrons.

Au delà de la grille G′1 terminant la zone de glissement, on trouve une grille de sélection G2 portée à un potentiel qui peut varier sous la commande d'un signal de sélection logique.

Dans un premier état, le signal logique correspond à un potentiel de répulsion (potentiel suffisamment négatif) qui freine les électrons et les renvoie vers la photocathode.

Ces électrons renvoyés, correspondant à des images non utiles, sont alors absorbés par la photocathode. Celle-ci peut d'ailleurs être portée à un potentiel positif chaque fois qu'un paquet d'électrons revient sur elle, pour faciliter la récupération des électrons.

Dans un deuxième état, le potentiel de la grille de sélection G2 est tel que les électrons ne sont pas freinés ou ne le sont que peu; ils traversent la grille de sélection et viennent frapper la face de sortie ES sur laquelle ils constituent une image utile qui pourra être analysée ou enregistrée.

On peut calculer très précisément la durée de transit d'un paquet d'électrons entre le moment où il est produit sur la photocathode PC et le moment où il parvient à proximité de la grille G2. Ce temps est dicté par plusieurs facteurs qui sont

- l'énergie de départ des électrons émis par la photocathode, donc leur vitesse de départ;
- la valeur du champ électrique d'accélération dans la zone d'accélération et la longueur D1 de cette zone;
- la longueur D′1 de la zone de glissement sans champ;
- éventuellement la valeur du champ électrique entre les grilles G′1 et G2 et la distance entre ces grilles, pour calculer le temps résiduel entre le passage d'un électron par la grille G′1 et l'arrivée à proximité de la grille G2.

L'énergie de départ des électrons dépend de la nature du matériau constituant la photocathode et de la longueur d'onde d'illumination; elle est de l'ordre de l'électron-volt pour les matériaux utilisés habituellement dans le domaine visible ou ultraviolet, et elle correspond à une vitesse d'éjection de l'ordre de 600km/s. Elle est toutefois dispersée autour de cette valeur comme on le verra plus loin.

Le champ dans la zone d'accélération est fixé par le rapport entre d'une part la différence de potentiel Vg1-Vpc entre la grille G1 et la photocathode et d'autre part la distance D1 entre ces deux électrodes. La différence est positive et le champ est accélérateur.

On peut calculer la durée T1 du parcours des électrons dans la zone d'accélération; elle est égale à

$$T1 = 2D1[(1 + V0/Vg1)^{\frac{1}{2}} - (V0/Vg1)^{\frac{1}{2}}]/(2eVg1/m)^{\frac{1}{2}}$$

où e est la charge de l'électron, m sa masse, V0 le potentiel d'extraction d'un électron hors du matériau constituant la photocathode pour la longueur d'onde lumineuse considérée.

On peut aussi calculer la vitesse de l'électron au passage par la grille G1 : en présence d'une accélération constante, la vitesse croît linéairement depuis la vitesse de départ u0 au moment de l'éjection ($u0 = (2eV0/m)^{\frac{1}{2}}$) jusqu'à une vitesse u1, avec

$$u1 - u0 = T1(Vg1-V0)e/mD1$$

La vitesse des électrons reste alors constante égale à u1, dans toute la zone de glissement puisque le champ électrique est nul dans cette zone.

On peut donc calculer précisément le temps mis par les électrons pour traverser cette zone de longueur D'1; ce temps T'1 est donné par:

$$T'1 = D'1/u1$$

qui peut aussi s'écrire :

$$T'1 = D'1(1 + V0/Vg1)^{-\frac{1}{2}}/(2eVg1/m)^{\frac{1}{2}}$$

On porte la grille de sélection G2 à un potentiel suffisamment positif lorsqu'une image doit être sélectionnée en vue d'une analyse; si Ti est l'instant de formation d'une image électronique sur la photocathode le potentiel de la grille G2 est modifié à un instant Ts qui est décalé par rapport à Ti d'une durée qui est essentiellement liée à la valeur T1 + T'1. Le reste du temps, le potentiel de la grille de sélection G2 est suffisamment négatif pour repousser les paquets d'électrons à leur sortie de la zone de glissement et les renvoyer vers la photocathode où ils seront éliminés.

Bien entendu, compte-tenu des caractéristiques propres du tube et plus particulièrement de la distance entre les grilles G'1 et G2 et de leurs potentiels respectifs, il sera peut-être nécessaire de décaler d'une durée Td l'instant de modification du potentiel par rapport à la valeur théorique Ti + T1 + T'1 : il faut tenir compte en effet du temps que mettent les électrons à être freinés puis repoussés par la grille de sélection vers la zone de glissement.

Le paquet d'électrons sélectionné à l'instant Ts (avec Ts = Ti + T1 + T'1 + Td) passe à travers la grille G2 et aussitôt après on ramène le potentiel de la grille G2 à sa valeur initiale répulsive. On a représenté sur la figure 1 un séquenceur SEQ déterminant les instants respectifs Ti (création d'une nouvelle image) et Ts (application d'un potentiel de sélection à la grille G2), pour contrôler les potentiels de la photocathode et de la grille de sélection.

Le paquet sélectionné passant à travers la grille de sélection G2 vient former une image sur l'écran de sortie ES placé au delà de la grille G2 et constituant la face de sortie du tube; l'image formée est lumineuse si l'écran ES est cathodoluminescent, ou électronique si les électrons viennent former des charges locales sur l'écran; dans ce dernier cas, l'écran est une cible accumulatrice de charges, fonctionnant par exemple par émission secondaire d'électrons. L'image produite peut être analysée ou enregistrée; sur la figure 1 on a représenté sous la forme d'une lentille 14 un moyen de focalisation de cette image lumineuse reconstituée; la focalisation est faite par exemple sur l'entrée d'une caméra photographique CM.

Grâce aux faibles potentiels d'accélération présents dans le tube, on a obtenu un stockage d'images en mouvement dans le tube pendant une durée relativement longue, de l'ordre de plusieurs centaines de nanosecondes par exemple pour des potentiels accélérateurs de quelques volts et pour des longueurs de tube de plusieurs dizaines de centimètres. Cette durée est très supérieure à la durée de transit d'une image optique dans des fibres optiques de plusieurs dizaines de mètres de long.

Des dizaines d'images peuvent se déplacer simultanément dans le tube, décalées temporellement et spatialement les unes par rapport aux autres.

Si l'écran de sortie ES nécessite que les électrons soient fortement accélérés (pour créer des impacts générant de la lumière par exemple), on pourra sans difficulté le porter à un potentiel Ves positif de plusieurs milliers de volts qui n'interférera pas avec les champs électriques dans le tube grâce à l'écran que constitue la grille G2 vis-à-vis de l'intérieur du tube.

Mais si l'écran peut fonctionner même avec de très faibles vitesses d'impact d'électrons, on peut éventuellement envisager de supprimer la grille G2, l'écran ES jouant lui-même le rôle de grille de sélection en étant porté soit à un potentiel répulsif pour éliminer les paquets d'électrons non sélectionnés soit à un potentiel non répulsif ou faiblement répulsif pour autoriser l'arrivée d'un paquet d'électrons sélectionné.

Les paquets d'électrons renvoyés par la grille G2 lorsqu'ils ne sont pas sélectionnés retraversent tout l'espace entre les grilles G2 et G'1, puis la zone de glissement entre les grilles G1 et G'1, puis la zone entre la grille G1 et la photocathode; ils sont absorbés par la photocathode qui sert d'électrode collectrice pour assurer leur évacuation.

On peut prévoir que la photocathode est portée à un potentiel légèrement positif à chaque fois qu'un paquet d'électrons revient pour être éliminé; on assure ainsi plus efficacement l'élimination des paquets. Mais alors, il faut que l'instant d'arrivée des paquets d'électrons ne coïncide pas avec les instants Ti auxquels on veut générer de nouvelles images; en effet le potentiel positif de la photocathode empêcherait la formation de nouveaux paquets d'électrons.

On s'arrange donc dans ce dernier cas pour que le moment de retour des paquets d'électrons à éliminer (moment qu'on peut calculer précisément de la même manière qu'on calcule le temps de trajet aller des paquets) se situe entre deux instants successifs Ti de formation de nouvelles images électroniques sur la photocathode.

La figure 2 symbolise les paquets d'électrons qui se déplacent simultanément dans le tube et qui sont aiguillés par la grille de sélection soit vers l'écran de sortie soit en retour vers la photocathode.

Pour terminer la description des figures 1 et 2, il faut signaler qu'il est tout-à-fait souhaitable que l'intérieur du tube soit soumis à un champ magnétique axial qui a pour effet de rassembler sur une même trajectoire et focaliser en un même point tous les électrons émis à partir d'un même point de la photocathode, rectifiant ainsi les trajets des électrons émis non perpendiculairement à la surface de la photocathode.

On a ainsi décrit sur un exemple simple les principes de base de la présente invention.

On peut noter que le temps de transit des paquets d'électrons peut être réglé par variation du potentiel d'accélération Vg1.

On va maintenant décrire un mode de réalisation dans lequel le temps de stockage utile des électrons dure pendant un trajet aller-retour des électrons dans le tube, la sélection étant faite à la fin de trajet aller-retour.

La construction du tube et les explications sont plus délicates mais l'importance de ce mode de réalisation vient du fait qu'il permet de prendre en compte le fait que les électrons émis par la photocathode n'ont pas tous la même énergie de départ; l'énergie moyenne des électrons d'un paquet est V0 (en électron-volts) mais les électrons individuels ont des énergies de départ statistiquement dispersées autour de V0. La dispersion peut-être de 30% ou 40% et elle n'est d'ailleurs pas connue très précisément.

Les électrons d'un paquet sont accélérés dans la zone d'accélération entre la photocathode et la grille G1. L'accélération est la même pour tous les électrons. Mais la vitesse initiale u0 n'est pas la même pour tous. La vitesse d'arrivée dans la zone de glissement n'est donc pas la même pour tous.

Dans cette zone de glissement, les électrons conservent la vitesse qu'ils ont acquise au moment où ils traversent la grille G1. Ceux qui avaient été émis par la photocathode avec une vitesse de départ u0 acquièrent une vitesse u1 et la conservent dans la zone de glissement; ceux qui avaient été émis par la photocathode avec une vitesse de départ u'0 acquièrent une vitesse u'1 et la conservent dans la zone de glissement.

On comprend donc que deux électrons d'une même image, émis à un instant donné mais avec deux énergies différentes s'éloignent l'un de l'autre au cours de ce trajet dans la zone d'accélération et la zone de glissement au lieu de rester groupés.

Il est important à ce stade de faire la remarque suivante: ce phénomène de dégroupement du paquet d'électrons correspondant à une même image est connu; il se produit dans tous les tubes intensificateurs d'images lumineuses. Mais il ne pose habituellement pas de problème car les électrons sont très fortement accélérés et acquièrent des vitesses très supérieures à leur vitesse initiale de sorte que la petite différence de vitesse de départ n'est pas significative à l'arrivée.

Ce phénomène de dégroupement devient au contraire important dans la présente invention où les potentiels d'accélération des électrons sont du même ordre de grandeur (quelques volts) que les énergies de départ des électrons de la photocathode, les énergies de départ pouvant subir une dispersion de plus ou moins 20% autour d'une valeur moyenne.

On verra comment ce problème est résolu d'une manière optimale selon l'invention.

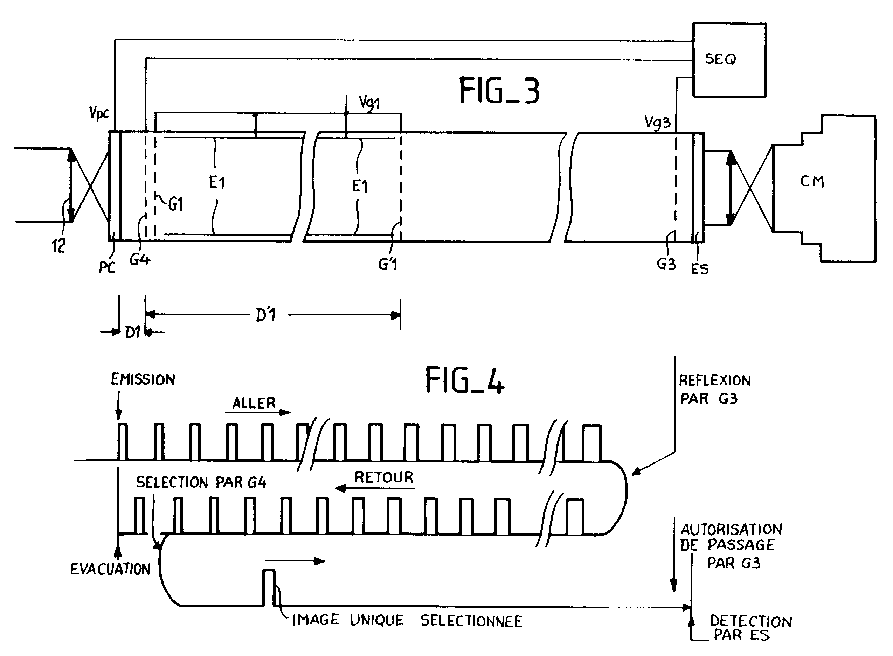

La figure 3 représente schématiquement la disposition intérieure du tube avec ses différentes grilles. Sur cette figure, la photocathode PC, la grille G'1 et les électrodes E1 de la zone de glissement, l'écran ES, et les moyens de focalisation 12 et 14, portent les mêmes références qu'à la figure 1 et jouent des rôles semblables.

La zone d'accélération immédiatement en aval de la photocathode PC est là encore très courte devant la longueur globale du tube. Sa longueur a été désignée encore par D1.

La zone de glissement à potentiel constant Vg1, qui suit la zone d'accélération, n'occupe plus que sensiblement la moitié de la longueur du tube au lieu d'occuper la quasi totalité. Sa longueur est désignée par D'1.

La zone de glissement est suivie par une zone de décélération dans laquelle un champ électrique sensiblement uniforme est établi, ce champ tendant à freiner les électrons jusqu'à les arrêter et les réaccélérer en sens inverse.

Le champ de décélération est établi grâce à une différence de potentiel entre l'électrode G'1 (qui marque à la fois la fin de la zone de glissement et le début de la zone de décélération) et une électrode G3 située à l'extrémité de la zone de décélération. Le potentiel Vg3 de l'électrode G3 est plus négatif que le potentiel Vg1 de l'électrode G'1. La valeur de la tension de décélération est choisie de telle sorte que les électrons d'un paquet soient tous freinés jusqu'à l'arrêt avant de parvenir à l'électrode G3, ceci quelle que soit leur vitesse d'origine à l'entrée dans la zone de décélération, c'est-à-dire quelle que soit leur énergie de départ à la sortie de la photocathode. Par conséquent le potentiel Vg3 doit être inférieur à -V0max si +V0max est le potentiel correspondant à l'énergie maximale de départ des électrons hors de la photocathode.

On expliquera plus loin que la grille G3 n'a pas seulement un rôle d'établissement d'un champ de décélération; elle a aussi un rôle de grille de sortie commandée par un signal logique pour laisser passer vers la face de sortie des paquets d'électrons sélectionnés. Les paragraphes qui suivent supposent d'abord que la grille G3 établit seulement le champ de décélération.

Selon que la vitesse initiale des électrons est plus ou moins élevée ils s'arrêtent plus ou moins loin dans la zone de décélération, mais de toutes façons ils s'arrêtent et repartent en sens inverse avec une accélération de retour dont la valeur est dictée par la valeur du champ de décélération.

A l'aller les électrons subissaient un phénomène de dégroupement dû à leurs vitesses initiales différentes; pendant la décélération et le retour, ils tendent à se regrouper: ceux qui sont partis plus vite à l'aller sont allés plus loin et ils mettant plus longtemps à revenir.

On peut montrer par le calcul qu'il peut exister une région du tube, située entre la zone de décélération et la face d'entrée, telle que les électrons soient regroupés au maximum dans cette région, à condition toutefois de choisir une longueur suffisante pour la zone de décélération. La position de cette région dépend de plusieurs facteurs, et plus particulièrement de la longueur de la zone de glissement et de la valeur des champs d'accélération et de décélération, et on peut s'arranger pour qu'elle soit située à proximité de la face d'entrée.

Dans cette région privilégiée on placera une électrode de sélection destinée à aiguiller sur des trajets différents les paquets d'électrons correspondant à des images utiles à analyser et les paquets d'électrons correspondant à des images inutiles à éliminer.

Le rôle de l'electrode de sélection est précisément de laisser passer vers la photocathode des paquets d'électrons revenant de la zone de décélération (paquets non sélectionnés) ou au contraire de réfléchir à nouveau vers l'avant un paquet sélectionné pour lui faire retraverser la zone d'accélération, la zone de glissement et la zone de décélération.

La photocathode pourrait remplir ce rôle de sélection puisqu'il suffit de la porter à un potentiel suffisamment positif pour qu'elle absorbe les électrons et de la porter à un potentiel suffisamment négatif pour qu'elle les réfléchisse vers l'avant.

On préfère selon l'invention utiliser une électrode de sélection séparée G4; cette électrode est placée à la distance D1 de la photocathode, c'est-à-dire à l'endroit définissant la fin de la zone d'accélération et le début de la zone de glissement; elle est portée au potentiel Vg1 lorsqu'il n'y a pas à effectuer de sélection de paquet d'électrons et elle définit bien alors le début de la zone de glissement; elle est portée à un potentiel négatif lorsqu'un paquet d'électrons circulant dans le sens retour doit être sélectionné.

La grille G1 de la figure 1 peut être supprimée ou placée immédiatement derrière la grille G4 et portée au potentiel constant Vg1.

On voit donc comment fonctionne la sélection retardée d'une image dans la séquence d'images à cadence rapide : les images arrivant à cadence élevée sont converties en paquets d'électrons séparés les uns des autres dans le temps et dans l'espace; les paquets se déplacent vers l'avant à une vitesse relativement lente; en même temps ils se dégroupent spatialement puisque les électrons plus rapides vont plus loin que les électrons plus lents; puis les paquets sont réfléchis par la grille G3 vers l'arrière du tube, toujours assez lentement; ils se regroupent durant leur trajet de retour vers la grille G4; en arrivant vers la grille G4 ils sont regroupés au maximum spatialement et temporellement; à cet endroit le risque de mélange entre deux paquets d'électrons correspondant à deux images successives est donc minimal; l'électrode de sélection G4 permet donc d'établir de manière précise une sélection d'un paquet sans mordre sur le précédent ou le suivant; le temps de transit des paquets d'électrons en aller et retour dans le tube a duré suffisamment pour que la grille G4 ait eu le temps de recevoir un signal de commande de sélection sous forme d'un changement de son niveau de potentiel; ce temps de transit d'un paquet d'électrons est très précisément connu en fonction des différentes caractéristiques de dimensions et de potentiels du tube; les paquets non sélectionnés passent à travers la grille G4 et retombent sur la photocathode où ils sont absorbés et évacués; un paquet sélectionné est réfléchi vers l'avant par la grille G4 à potentiel négatif et on va le diriger vers la face de sortie.

C'est ce que résume la figure 4.

Lorsqu'un paquet d'électrons sélectionné est réfléchi vers l'avant, on interdit la création de nouveaux paquets d'électrons par la photocathode; cela est facile pendant la réflexion proprement dite car le potentiel négatif de la grille G4 empêche cette production; mais on l'interdit aussi pendant la période qui suit la réflexion, en portant la photocathode à un potentiel plus élevé que le potentiel Vg1 des grilles G1 et G4.

Il est en effet préférable d'interdire alors la production de nouveaux paquets d'électrons non pas seulement pendant la durée d'une seule image, mais pendant plusieurs durées d'image de manière à bien isoler le paquet d'électrons sélectionné.

On peut même prévoir que la photocathode est ainsi inhibée dans son fonctionnement un certain temps avant l'arrivée vers la grille G4 du paquet à sélectionner et pratiquement pendant tout le temps que le paquet d'électrons sélectionné va mettre pour arriver à la sortie du tube ou au moins jusqu'à la sortie de la zone de glissement. Ce n'est qu'ensuite qu'une nouvelle création de paquets d'électrons sera autorisée.

L'isolement est ainsi assuré à l'avant et à l'arrière du paquet sélectionné; il ne se mélangera pas à d'autres paquets lors de son deuxième trajet aller de la face d'entrée à la face de sortie; d'autre part il n'y aura pas derrière lui de nouveaux paquets émis par la photocathode, paquets dont le déplacement serait perturbé lors de la sortie du paquet sélectionné à travers l'électrode G3.

Le paquet sélectionné retraverse tout le tube et on change le potentiel de la grille G3 pendant qu'il est dans la zone de décélération entre les grilles G'1 et G3, de manière qu'il ne soit plus arrêté par le champ décélérateur. Bien entendu, on ne change le potentiel de la grille G3 que lorsque les derniers paquets d'électrons qui ont été émis par la photocathode avant la sélection ont subi leur phase de décélération, d'arrêt et de renvoi vers l'arrière.

On ne transmet donc vers la face de sortie du tube que le paquet sélectionné. Ce paquet forme une image visible sur la face de sortie si elle est constituée par une couche cathodoluminescente; il peut aussi former une image électronique si cette face est constituée par exemple par une couche capacitive telle que la cible d'une caméra à balayage, ou par une matrice à transfert de charges.

De la même manière qu'on a calculé, dans le cas de la figure 1, le temps de transit des paquets d'électrons entre le moment où ils sont produits et le moment où ils parviennent à proximité de la grille de sélection, on peut aussi calculer le temps de transit dans le cas de la figure 3.

Ce temps comprend les mêmes temps T1 et T'1 qu'à la figure 1, à quoi il faut ajouter :

- un temps T2 de freinage jusqu'à l'arrêt dans la zone de décélération,
- un temps T'2 de réaccélération en sens inverse dans la même zone jusqu'au retour dans la zone de glissement;
- un temps T3 égal au temps T'1 de transit à vitesse constante dans la zone de glissement; T3 est égal à T'1.

La somme des temps T2 et T'2 varie proportionnellement à la racine carrée de la quantité $(1 + V0/Vg1)$ où on rappelle que V0 est l'énergie d'extraction d'un électron de la photocathode et Vg1 le potentiel dans la zone glissement. Plus précisément,

$$T2 + T'2 = [2D2(1 + V0/Vg1)^{\frac{1}{2}}]/[(2eVg1/m)^{\frac{1}{2}}(1 + Vg3/Vg1)]$$

D2 est la distance entre les électrodes G'1 et G3 et Vg3 est le potentiel de la grille G3, le champ décélérateur ayant une valeur uniforme (Vg3 - Vg1)/D2.

Le temps de transit d'un paquet d'électrons entre son émission par la photocathode, sa traversée aller et retour dans le tube et son arrivée sur la grille G4, peut donc être calculé précisément; on note d'ailleurs qu'il dépend des potentiels des grilles G4, G1, G'1 d'une part et G3 d'autre part et on peut donc ajuster le fonctionnement en fonction des temps désirés.

L'instant auquel une modification de potentiel doit être appliquée à la grille G4, après l'instant Ti de production d'une image à sélectionner, est l'instant

$$Ts = Ti + T1 + T'1 + T2 + T'2 + T3 - T'd$$

où T'd désigne un intervalle de temps tenant compte du fait qu'il est nécessaire de commander le changement de potentiel de la grille G4 avant que le paquet à sélectionner n'atteigne effectivement cette grille.

Sans entrer dans les détails, on peut indiquer ici que les équations donnant T1, T'1, T2, T'2, T3 permettent de déterminer quel est l'endroit où la grille G4 devrait être placée pour aboutir à une sélection des paquets d'électrons à l'endroit où ils sont le plus regroupés dans le temps et dans l'espace. On peut constater que

- T1 est négligeable devant T'1 ou T2 ou T'2 puisque D1 est petit devant D'1
- T'1 varie sensiblement proportionnellement à la quantité $(1 - V0/2Vg1)$, d'où le phénomène de dégroupement, cette approximation étant faite en supposant que V0/Vg1 est relativement petit devant l'unité;
- T2 + T'2 varie sensiblement proportionellement à la quantité $(1 + V0/2Vg1)$, d'où le phénomène de regroupement;
- les facteurs de proportionalité font intervenir les potentiels et distances entre grilles et ils permettent de choisir l'endroit où s'effectue un regroupement optimal.

Généralement, il sera préférable d'effectuer le regroupement à proximité immédiate de la photocathode, la grille de sélection G4 servant alors en même temps de grille d'accélération lorsqu'il n'y a pas de sélection.

Les temps de transit partiels dans les différentes zones dépendent des valeurs de distances D2 et D'1 notamment; elles dépendent aussi de l'énergie de départ V0 des électrons. On veut que pour des énergies différentes le temps de transit total soit le même. On peut vérifier que le temps de transit aller T'1 dans la zone de glissement diminue lorsque V0 augmente, alors qu'au contraire le temps de transit global aller-retour dans la zone de décélération (T2 + T'2) augmente lorsque V0 augmente. Une compensation est donc possible. Une méthode pour calculer les distances permettant une compensation est de choisir deux valeurs extrêmes V0min et V0max d'énergies de départ, et de choisir les paramètres qui permettent de rendre égaux les temps de transit globaux de la photocathode jusqu'à la grille de sélection en fonction de la position choisie pour celle-ci.

On vérifiera qu'une compensation est possible à condition de prévoir une longueur de zone de décélération suffisante; cette longueur (D2) est une longueur non négligeable devant la longueur totale du tube comme on le verra dans les exemples chiffrés donnés plus loin.

Comme indiqué à propos de la figure 1, on aura tout avantage à faire fonctionner le tube dans un champ magnétique axial élevé, ou à munir le tube de bobines de création d'un tel champ magnétique axial. De cette manière les trajectoires des électrons sont focalisées d'un point de la photocathode sur un point de l'écran de sortie quelle que soit la direction initiale d'éjection de l'électron.

On va maintenant récapituler le fonctionnement du système en donnant quelques valeurs numériques pour mieux faire comprendre le déroulement des différentes phases.

Les dimensions de tube choisies dans cet exemple numérique sont les suivantes:

- diamètre 50 millimètres
- distance entre photocathode et grille G4: D1 = 1 millimètre, et grille G1 immédiatement derrière;
- distance entre la grille G4 et la grille G'1: D'1 = environ 325 millimètres;

- distance entre la grille G'1 et la face de sortie: environ 230 millimètres; la grille G3 peut être placée à proximité immédiate (quelques millimètres, par exemple 5 à 10 millimètres) de la face de sortie.

La photocathode est par exemple en antimoniure de césium SbCs$_3$, l'énergie de départ d'un électron étant d'environ 1 électron-volt en lumière visible ou proche ultraviolette.

## A. PRODUCTION D'IMAGES PAR LA PHOTOCATHODE

Deux possibilités:

a) ou bien les images lumineuses arrivent de manière discontinue, par exemple une image de durée 2 à 3 nanosecondes toutes les 10 nanosecondes;

- la photocathode peut rester à un potentiel nul en permanence
- la grille G4 est à un potentiel faiblement accélérateur Vg1 de l'ordre de 4 volts;
- la grille G1 est aussi au potentiel Vg1 de 4 volts;
- la grille G3 est à un potentiel répulsif Vg3 d'environ -3 volts;
- le temps de transit aller d'un paquet d'électrons de la photocathode vers l'intérieur du tube et retour jusqu'à la grille de sélection G3 est de l'ordre de 995 nanosecondes. On choisit pour ce temps une valeur intermédiaire entre deux multiples consécutifs de la période (10 nanosecondes) séparant deux paquets d'électrons, de manière que le retour des paquets ne coïncide pas avec l'émission d'autres paquets.

b) ou alors les images lumineuses arrivent de manière continue et il faut rendre les paquets d'onde discontinus par inhibition périodique de la photocathode.

- les valeurs des potentiels Vg1 et Vg3 sont les mêmes que précédemment, c'est-à-dire respectivement +4 volts et -3 volts;
- la photocathode est à un potentiel nul lorsqu'une image électronique doit être engendrée sous forme d'un paquet d'électrons;
- elle est portée à un potentiel supérieur à 5 volts environ (c'est-à-dire supérieur à Vg1 + V0 si V0 est le potentiel correspondant à l'énergie des électrons de la photocathode) lorsque l'extraction doit être inhibée; cette inhibition a lieu de préférence régulièrement, par exemple pendant 5 microsecondes toutes les 10 microsecondes; elle a lieu en tout cas au moment où la grille de sélection G4 réfléchit un paquet d'électrons sélectionné, et elle a lieu de préférence aussi quelques périodes de 10 nanosecondes avant et quelques périodes après cette commande de sélection. Le potentiel Vpc de photocathode en phase d'inhibition peut être de +8 volts par exemple.

## B. EVACUATION D'IMAGES NON UTILES AU RETOUR

La photocathode est portée périodiquement à un potentiel positif (par exemple encore +8 volts) à chaque fois qu'un paquet d'électrons doit être évacué après qu'il ait retraversé en retour la grille G4.

Mais on peut aussi garder un potentiel nul sur la cathode et porter périodiquement la grille G4 à un potentiel suffisamment positif pour accélérer les paquets d'électrons en retour vers la cathode pendant des intervalles de temps où il n'y a pas d'émission par la photocathode.

## C. SELECTION D'UN PAQUET D'ELECTRONS

L'ordre de sélection d'une image doit être connu dans un délai d'un peu moins de 995 nanosecondes après l'arrivée de l'image lumineuse sur la photocathode. Par exemple, l'ordre est connu au bout de 900 nanosecondes, l'origine des temps étant prise à l'instant Ti d'arrivée de l'image lumineuse.

Quelques périodes avant l'arrivée du paquet d'électrons correspondant en retour sur la grille G4, par exemple au bout d'un temps égal à 955 nanosecondes, la photocathode est portée à un potentiel suffisamment positif (supérieur à Vg1 + V0) pour inhiber la photocathode.

Puis, au moment de l'arrivée du paquet d'électrons sur la grille G4, par exemple du temps 992 nanosecondes au temps 997 nanosecondes, la grille G4 est portée à un potentiel suffisamment négatif, de préférence inférieur à -(Vg1 + V0) où Vg1 est le potentiel de G4 en l'absence d'ordre de sélection, pour que le paquet d'électrons soit totalement réfléchi vers l'avant du tube. Le potentiel de sélection appliqué à la grille G4 peut être par exemple -5 volts.

Ensuite, le potentiel de photocathode reste positif pour inhiber la production d'images pendant une durée pouvant être de l'ordre de 250 nanosecondes; cette durée correspond sensiblement à la traversée aller de la zone d'accélération est la zone de glissement par le paquet d'électrons sélectionné et réfléchi; ce n'est qu'après ce délai que le potentiel de la photocathode est remis à zéro pour recommencer la production périodique de paquets d'électrons.

### D. SORTIE D'UNE IMAGE SELECTIONNEE

Lorsque le paquet d'électrons sélectionné a franchi la majeure partie de la zone de décélération entre les grilles G′1 et G3, la grille G3 est portée à un potentiel moins décélérateur (un potentiel positif mais n'allant pas jusqu'à dépasser Vg1) de sorte que le paquet d'électrons peut franchir complètement la grille G3.

Les autres paquets d'électrons qui se trouvant devant le paquet sélectionné, et qui sont des paquets ayant juste terminé leur premier trajet aller, ont déjà commencé à repartir vers la face d'entrée au moment où on change le potentiel de la grille G3; ils sont donc soumis à l'action d'un champ faible, mais accélérateur quand même dans le sens du retour, qui les entraîne dans leur trajet de retour. Il y a donc bien séparation entre le paquet sélectionné et les paquets qui le précèdent.

Le potentiel de la grille G3 peut être compris par exemple entre 0 et +4 volts par exemple.

Derrière la grille G3, on prévoit de préférence que la surface de l'écran de sortie cathodoluminescent ES est porté à un potentiel fortement positif qui accélère les électrons vers cette cible. Le potentiel peut être de l'ordre de plusieurs milliers de volts.

Un séquenceur de signaux établit les synchronisations nécessaires entre les différents potentiels d'électrodes pour obtenir le fonctionnement décrit ci-dessus.

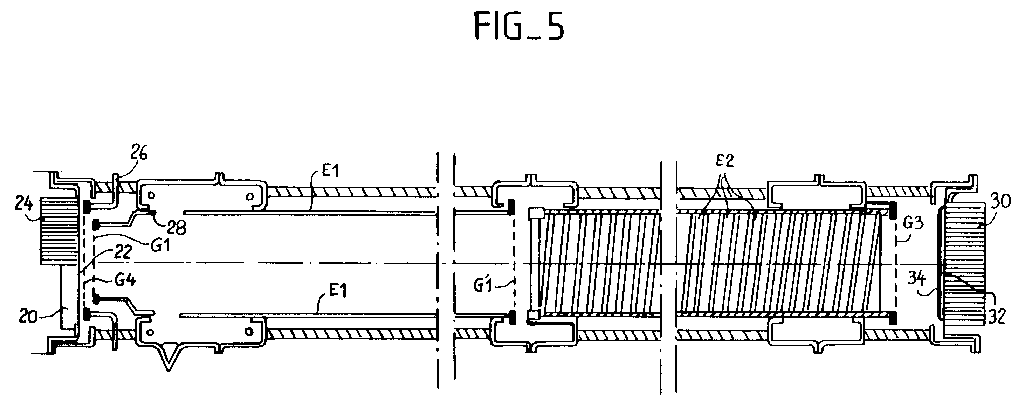

La figure 5 représente un exemple de construction réelle d'un tube de stockage et sélection d'images électroniques selon l'invention. Des dimensions sont données à titre d'exemple en millimètres.

La face d'entrée est constituée soit par une plaque de verre transparente 20 recouverte, du côté intérieur au tube, par une couche de matériau photoémissif 22 constituant la photocathode proprement dite, soit par un faisceau de fibres optiques 24 dont le plan d'extrémité intérieur au tube est également recouvert d'une couche de matériau émissif 22. Par commodité, ces deux possibilités ont été représentées simultanément sur la figure 5, l'une dans la moitié supérieure de la face d'entrée et l'autre dans la moitié inférieure.

Le matériau émissif peut être de l'antimoniure de césium $SbCs_3$, ou un autre corps photoémissif à base d'antimoine et de métaux alcalins ou à base d'arséniure de gallium et césium, tous ces matériaux présentant un bon rendement de conversion photon/électron pour la lumière visible ou proche du visible et permettant l'émission d'électrons de faible énergie, de l'ordre de l'électron-volt.

La grille G4 est placée à proximité immédiate de la couche émissive (1 millimètre par exemple). La grille G1 est immédiatement derrière. Ces deux grilles sont supportées par des supports respectifs 26 pour G4 et 28 pour G1 et ces supports servent de connexion électrique pour les alimenter avec les potentiels indiqués précédemment (potentiel constant pour G1 et potentiel variable pour G4).

Au delà de la grille G1, on trouve une ou plusieurs électrodes cylindriques E1 reliées électriquement à la grille G1 et maintenant un potentiel constant dans toute la zone de glissement, jusqu'à la grille G′1.

La grille G′1 peut être portée par un support séparé ou être portée par l'électrode E1 à l'extrémité de celle-ci.

La zone de décélération qui suit la zone de glissement est comprise entre l'électrode G′1 située vers le milieu du tube et l'électrode G3 située à l'extrémité proche de la face de sortie.

Le champ électrique décélérateur dans cette zone est produit d'une part par la différence de potentiel entre les grilles G′1 et G3 et d'autre part par des électrodes E2 qui entourent cette zone. Ces électrodes E2 sont portées à des potentiels permettant de rendre le champ décélérateur aussi uniforme que possible dans toute la zone de décélération.

Une construction classique pour obtenir un champ uniforme consiste à prévoir une électrode E2 cylindrique en matériau résistif, tout autour de la zone, une extrémité du cylindre étant portée au potentiel de la grille G′1 qui lui est adjacente, et l'autre extrémité étant portée au potentiel de la grille G3 qui lui est adjacente.

D'autres constructions sont possibles, en particulier celle adoptée dans la construction du tube de la figure 5: l'électrode E2 est une hélice en matériau résistif entourant la zone de décélération, avec une extrémité au potentiel Vg1 de la grille G′1 et l'autre au potentiel de la grille G3.

L'écran de sortie utilisé dans la construction de la figure 5 est constitué par un faisceau de fibres optiques 30 dont une face, située du côté intérieur du tube, est recouverte d'une couche fluorescente 32, elle même recouverte d'une fine couche conductrice (aluminium) 34 permettant de la porter à un potentiel positif de plusieurs milliers de volts.

La couche fluorescente 32, destinée à former une image lumineuse lorsqu'elle reçoit un paquet d'électrons sélectionné, cette image étant la reproduction de l'image lumineuse qui a donné naissance sur la photocathode au paquet d'électrons sélectionné, peut être en sulfure de zinc activé au cuivre ou à l'argent, ou en silicate de zinc et magnésie, ou encore en oxyde d'yttrium, en oxysulfure d'yttrium ou de gadolinium, etc.

L'image formée sur cette couche peut être transmise par focalisation optique au lieu d'un faisceau de fibres optiques; la couche fluorescente est alors déposée sur une plaque de verre fermant le tube.

On peut aussi intercaler entre la grille G4 et la face de sortie une structure multiplicatrice d'électrons, telle que celles utilisées dans les tubes intensificateurs d'images lumineuses.

Dans une variante de réalisation, on peut prévoir que le tube comporte , dans l'espace de glissement, un dispositif de déflexion (plaques électrostatiques ou bobines électromagnétiques) établissant un champ électrique ou un champ magnétique transversal permettant d'orienter le paquet d'électrons sur une zone particulière de l'écran de sortie, le changement des potentiels sur ces plaques de déflexion permet l'orientation d'un autre paquet sur une autre zone; l'écran de sortie est ainsi divisé en plusieurs zones et les paquets sélectionnés successifs d'électrons viennent se focaliser sur des zones différentes de l'écran. On augmente ainsi le temps disponible pour l'analyse d'images sélectionnées puisqu'une image peut rester sur l'écran même si un autre paquet sélectionné arrive, étant donné que cet autre paquet viendra à côté du premier au lieu de l'effacer.

## Revendications

1. Procédé pour mémoriser une succession d'images arrivant à cadence élevée, pour ensuite sélectionner une des images en vue d'une analyse et éliminer les autres, comprenant les étapes consistant :
   - à focaliser les images lumineuses sur une photocathode à l'entrée d'un tube électronique de conversion d'image,
   - à convertir les images lumineuses en images électroniques sous forme de paquets d'électrons se déplaçant dans le vide à l'intérieur du tube,
   - à conférer à ces paquets d'électrons, par l'application d'un champ électrique accélérateur d'amplitude faible, une vitesse de déplacement connue très faible devant la vitesse de la lumière,
   - à faire subir aux paquets d'électrons un trajet aller et retour dans le tube,
   - à créer en une section du tube, à l'aide d'une électrode de sélection (G4), un champ électrique contrôlé par un signal logique de sélection, ce champ ayant soit une première valeur pour laquelle les électrons sont repoussés par l'électrode vers l'intérieur du tube, soit une deuxième valeur pour laquelle les électrons peuvent passer à travers l'électrode, le signal logique de sélection étant produit en synchronisme avec l'arrivée d'un paquet d'électrons à sélectionner à proximité de l'électrode de sélection, l'instant d'arrivée étant lié à la vitesse de déplacement des paquets d'électrons,
   - et enfin à produire à la sortie du tube une image électronique à l'aide de paquets d'électrons sélectionnés par le signal logique et à éliminer les paquets d'électrons non sélectionnés

   caractérisé en ce que la sélection du paquet sélectionné est faite au cours du trajet retour des électrons, dans une région où les électrons destinés à former le paquet sont regroupés.

2. Procédé selon la revendication 1, caractérisé en ce qu'on crée un champ électrique accélérateur faible dans une zone d'accélération s'étendant sur une courte distance (D1) à la sortie de la section d'entrée, et un champ électrique nul dans une zone de glissement s'étendant sur une grande distance (D'1) suivant la courte distance.

3. Procédé selon la revendication 2, caractérisé en ce que l'on crée un champ électrique décélérateur dans une zone de décélération qui suit la zone de glissement, le champ électrique décélérateur étant suffisant pour que tous les électrons d'un paquet soient freinés jusqu'à l'arrêt dans la zone de décélération puis réaccélérés dans le sens du retour.

4. Procédé selon la revendication 3, caractérisé en ce que l'on applique à l'électrode de sélection un potentiel tendant à repousser vers l'intérieur du tube un paquet d'électrons sélectionnés et à diriger vers la photocathode les paquets d'électrons non sélectionnés.

5. Procédé selon l'une des revendications 1 à 4, caractérisé en ce que l'électrode de sélection est placée dans une zone telle que le temps de transit des électrons pour effectuer un trajet aller-retour de la photocathode jusqu'à la grille de sélection soit sensiblement le même pour des énergies d'émission différentes des électrons au départ de la photocathode, dans la gamme d'énergies d'émission probables de la photocathode.

6. Dispositif de mémorisation temporaire d'images lumineuses et de sélection d'une image parmi les images mémorisées, comportant un tube électronique comprenant :

- une section d'entrée (PC) permettant la conversion d'une image lumineuse en image électronique sous forme de paquets d'électrons;
- une section de stockage dans laquelle les champs électriques sont tels que les électrons se déplacent à une vitesse très faible devant la vitesse de la lumière;
- une électrode de sélection (G4) portée à un potentiel pouvant prendre une valeur ou une autre sous la commande d'un signal logique de sélection, l'une des valeurs de potentiel permettant de repousser les électrons arrivant vers l'électrode et l'autre valeur permettant aux électrons de passer à travers l'électrode de sélection;
- un moyen d'évacuation (PC) des paquets d'électrons non sélectionnés,
- une section de sortie (ES) avec un moyen de reconstitution d'une image électronique à partir d'un paquet d'électrons sélectionné,
- le signal logique de sélection étant appliqué avec un décalage temporel très précis par rapport à l'instant d'entrée d'une image à sélectionner, le décalage correspondant au temps de transit du paquet d'électrons de la section d'entrée à la section de stockage et dans la section de stockage jusqu'à proximité de l'électrode de sélection (G4),

caractérisé en ce que l'électrode de sélection (G4) est placée du côté de la section d'entrée du tube pour permettre la sélection d'un paquet d'électrons sur son trajet de retour.

7. Dispositif de mémorisation temporaire et de sélection selon la revendication 6, caractérisé en ce que l'électrode de sélection est une grille de sélection (G4) transparente aux électrons.

8. Dispositif selon la revendication 7, caractérisé en ce que la section d'entrée comporte une photocathode (PC), et en ce que la section de stockage comporte
- une zone d'accélération entre la photocathode (PC) et la grille de sélection (G4), le champ électrique dans cette zone étant faible et accélérateur pour les paquets d'électrons émis par la photocathode, la zone d'accélération s'étendant sur une courte distance (D1) à partir de la photocathode,
- une zone de glissement s'étendant sur une distance (D'1) non négligeable devant la longueur totale du tube, après la zone d'accélération, le champ électrique dans la zone de glissement étant sensiblement nul,
- une zone de décélération suivant la zone de glissement, le champ électrique dans cette zone étant décélérateur pour les paquets d'électrons émis par la photocathode, et la zone de décélération s'étendant sur une distance non négligeable devant la longueur du tube.

9. Dispositif selon l'une des revendications 7 et 8, caractérisé en ce qu'il comporte des moyens pour porter la grille de sélection soit à un potentiel égal à celui régnant dans la zone de glissement soit à un potentiel plus négatif que celui de la photocathode, et des moyens pour réduire le champ décélérateur dans la zone de décélération lorsqu'un paquet d'électrons sélectionné retraverse cette zone après un aller-retour dans le tube, la réduction du champ étant suffisante pour autoriser le déplacement du paquet d'électrons jusqu'à la section de sortie du tube.

10. Dispositif selon la revendication 9, caractérisé en ce que la section de sortie comporte une grille de sortie (G3) dont le potentiel peut être varié pour modifier la valeur du champ électrique dans la zone de décélération.

11. Dispositif selon l'une des revendications 6 à 9, caractérisé en ce que le tube comporte des moyens pour faire subir aux paquets d'électrons un trajet aller et un trajet retour dans le tube entre la section d'entrée et l'électrode de sélection, celle-ci étant placée dans le tube à un endroit tel que le temps de transit des électrons pour effectuer un trajet aller-retour de la photocathode jusqu'à la grille de sélection soit sensiblement le même pour des énergies d'émission différentes des électrons au départ de la photocathode, dans la gamme d'énergies probables d'émission de la photocathode.

## Claims

1. Process for storing a succession of images arriving at high rate, in order then to select one of the images for the purpose of analysis and to discard the others, comprising the steps consisting in:
   - focusing the light images onto a photocathode at the entrance of an image conversion electron tube,
   - converting the light images into electronic images in the form of packets of electrons moving in vacuo inside the tube,

- impressing upon these packets of electrons, by applying a low-amplitude accelerating electric field, a known speed of travel which is very low compared with the speed of light,
- making the packets of electrons undergo an outward and return journey in the tube,
- creating at one section of the tube, with the aid of a selection electrode (G4), an electric field controlled by a logic selection signal, this field having either a first value for which the electrons are repelled by the electrode towards the inside of the tube, or a second value for which the electrons can pass through the electrode, the logic selection signal being produced in synchronism with the arrival of a packet of electrons to be selected in proximity to the selection electrode, the instant of arrival being related to the speed of travel of the packets of electrons,
- and finally, producing an electronic image at the exit of the tube with the aid of packets of electrons selected by the logic signal and discarding the unselected packets of electrons

characterized in that the selection of the selected packet is undertaken in the course of the return journey of the electrons, in a zone in which the electrons intended to form the packet are bunched.

2. Process according to Claim 1, characterized in that a weak accelerating electric field is created in an acceleration region extending over a short distance (D1) at the exit of the entrance section, and a zero electric field is created in a slip region extending over a large distance (D'1) following the short distance.

3. Process according to Claim 2, characterized in that a decelerating electric field is created in a deceleration region which follows the slip region, the decelerating electric field being sufficient for all the electrons of a packet to be braked to rest in the deceleration region, then reaccelerated in the return direction.

4. Process according to Claim 3, characterized in that to the selection electrode is applied a potential tending to repel a packet of selected electrons towards the inside of the tube and to direct the packets of unselected electrons towards the photocathode.

5. Process according to one of Claims 1 to 4, characterized in that the selection electrode is placed in a region such that the time of transit of the electrons in order to make an outward/return journey from the photocathode to the selection grid is substantially the same for different energies of emission of the electrons leaving the photocathode, within the range of probable energies of emission of the photocathode.

6. Device for temporary storage of light images and for selection of one image from the stored images, including an electron tube comprising:
   - an entrance section (PC) allowing the conversion of a light image into an electronic image in the form of packets of electrons;
   - a storage section in which the electric fields are such that the electrons move at a very low speed compared with the speed of light;
   - a selection electrode (G4) raised to a potential which can take one or another value under the control of a logic selection signal, one of the values of potential making it possible to repel the electrons arriving at the electrode and the other value making it possible for the electrons to pass through the selection electrode;
   - a means (PC) of removing the packets of unselected electrons,
   - an exit section (ES) with a means of reconstructing an electronic image from a selected packet of electrons,
   - the logic selection signal being applied with a very precise time shift with respect to the instant of entry of an image to be selected, the shift corresponding to the time of transit of the packet of electrons from the entrance section to the storage section and within the storage section up to proximity to the selection electrode (G4),

   characterized in that the selection electrode (G4) is placed beside the entrance section of the tube in order to allow the selection of a packet of electrons on its return journey.

7. Device for temporary storage and selection according to Claim 6, characterized in that the selection electrode is a selection grid (G4) which is transparent to electrons.

8. Device according to Claim 7, characterized in that the entrance section includes a photocathode (PC), and in that the storage section includes

- an acceleration region between the photocathode (PC) and the selection grid (G4), the electric field in this region being weak and accelerating in respect of the packets of electrons emitted by the photocathode, the acceleration region extending over a short distance (D1) from the photocathode,
- a slip region extending over a distance (D'1) which is non-negligible compared with the total length of the tube, after the acceleration region, the electric field in the slip region being substantially zero,
- a deceleration region following the slip region, the electric field in this region being decelerating in respect of the packets of electrons emitted by the photocathode, and the deceleration region extending over a distance which is non-negligible compared with the length of the tube.

9. Device according to either of Claims 7 and 8, characterized in that it includes means for raising the selection grid either to a potential equal to that prevailing in the slip region or to a potential which is more negative than that of the photocathode, and means for reducing the decelerating field in the deceleration region when a selected packet of electrons crosses this region again after an outward/return journey in the tube, the reduction in the field being sufficient to permit the movement of the packet of electrons up to the exit section of the tube.

10. Device according to Claim 9, characterized in that the exit section includes an exit grid (G3) whose potential can be varied in order to modify the value of the electric field in the deceleration region.

11. Device according to one of Claims 6 to 9, characterized in that the tube includes means for making the packets of electrons undergo an outward journey and a return journey in the tube between the entrance section and the selection electrode, the latter being placed in the tube at a location such that the time of transit of the electrons in order to perform an outward/return journey from the photocathode to the selection grid is substantially the same for different energies of emission of the electrons leaving the photocathode, within the range of probable energies of emission of the photocathode.

**Patentansprüche**

1. Vorgang zum Speichern einer im schnellen Takt ankommenden Folge von Bildern zur nachfolgenden Auswahl eines der Bilder zur Auswertung und zur Ausschaltung der anderen mit folgenden Schritten:
    - Fokussieren der leuchtenden Bilder auf eine Photokathode am Eingang einer elektronischen Bildwandelröhre,
    - Umwandeln der leuchtenden Bilder in elektronische Bilder in der Form von Elektronenpaketen, die sich im Vakuum im Röhreninneren bewegen,
    - den Elektronenpaketen durch Anlegen eines elektrischen Beschleunigungsfeldes mit geringer Amplitude eine bekannte, gegenüber der Lichtgeschwindigkeit sehr geringe Bewegungsgeschwindigkeit zu erteilen,
    - den Elektronenpaketen einen Hin- und Rückweg in der Röhre aufzuerlegen,
    - Erzeugen in einem Röhrenteil eines durch ein logisches Auswählsignal gesteuerten elektrischen Feldes mit Hilfe einer Auswählelektrode (G4), wobei dieses Feld entweder einen ersten Wert besitzt, für den die Elektronen durch die Elektrode zum Röhreninneren hin zurückgestoßen werden, oder einen zweiten Wert, für den die Elektronen an der Elektrode vorbeilaufen können, wobei das logische Auswählsignal im Gleichlauf mit der Ankunft eines Elektronenpakets zur Auswahl in der Nähe der Auswählelektrode erzeugt wird, wobei der Moment der Ankunft mit der Bewegungsgeschwindigkeit der Elektronenpakete verbunden ist.
    - und schließlich Erzeugen am Röhrenausgang eines elektronischen Bildes mit Hilfe der vom Logiksignal ausgewählten Elektronenpakete und Ausscheiden der nicht ausgewählten Elektronenpakete,
    dadurch gekennzeichnet, daß die Auswahl des ausgewählten Paketes im Verlauf des Rückweges der Elektronen stattfindet, und zwar in einem Bereich, in dem die zur Bildung des Paketes bestimmten Elektronen umgruppiert werden.

2. Vorgang nach Anspruch 1, dadurch gekennzeichnet, daß ein schwaches elektrisches Beschleunigungsfeld in einer Beschleunigungszone erzeugt wird, die sich über einen kurzen Weg (D1) am Ausgang des Eingangsabschnittes erstreckt, und ein elektrisches Feld von Null in einer Gleitzone, die sich über einen dem kurzen Weg folgenden großen Weg (D'1) erstreckt.

3. Vorgang nach Anspruch 2, dadurch gekennzeichnet, daß ein elektrisches Verzögerungsfeld in einer Verzögerungszone erzeugt wird, die der Gleitzone folgt, wobei das elektrische Verzögerungsfeld dafür ausreicht, daß alle Elektronen eines Paketes in der Verzögerungszone bis zum Anhalten abgebremst und danach in die Rückrichtung wieder beschleunigt werden.

4. Vorgang nach Anspruch 3, dadurch gekennzeichnet, daß an die Auswählelektrode ein Potential angelegt wird, das dazu neigt, ein ausgewähltes Elektronenpaket zum Röhreninneren hin zurückzustoßen und die nicht ausgewählten Elektronenpakete zur Photokathode hin zu leiten.

5. Vorgang nach einem der Ansprüche 1 bis 4, dadurch gekennzeichnet, daß die Auswählelektrode in eine solche Zone plaziert wird, daß die Laufzeit der Elektronen zum Bewirken eines Hin- und Rücklaufs von der Photokathode bis zum Auswählgitter für unterschiedliche Emissionsenergien der Elektronen von der Photokathode aus innerhalb des Bereiches von möglichen Emissionsenergien der Photokathode etwa gleich ist.

6. Vorrichtung zur zeitweiligen Speicherung von leuchtenden Bildern und Auswahl eines Bildes unter den gespeicherten Bildern mit einer Elektronenröhre, die folgendes umfaßt:
   - einen Eingangsteil (PC), der die Umwandlung eines leuchtenden Bildes in ein elektronisches Bild in der Form von Elektronenpaketen ermöglicht;
   - einen Speicherteil, in dem die elektrischen Felder derart sind, daß die Elektronen sich mit einer gegenüber der Lichtgeschwindigkeit sehr geringen Geschwindigkeit bewegen;
   - eine Auswählelektrode (G4), die mit einem Potential beaufschlagt wird, das unter der Steuerung eines logischen Auswählsignals einen Wert oder einen anderen annehmen kann, wobei einer der Potentialwerte das Zurückstoßen der an der Elektrode ankommenden Elektronen ermöglicht und der andere Wert es den Elektronen ermöglicht, an der Auswählelektrode vorbeizulaufen;
   - ein Abziehmittel (PC) der nicht ausgewählten Elektronenpakete;
   - einen Ausgangsteil (ES) mit einem Mittel zur Wiederherstellung eines elektronischen Bildes aus einem ausgewählten Elektronenpaket,
   - wobei das logische Auswählsignal mit einer in bezug auf den Moment des Eingangs eines auszuwählenden Bildes sehr genauen Zeitverschiebung angelegt wird, wobei die Verschiebung der Durchlaufzeit des Elektronenpaketes vom Eingangsteil zum Speicherteil und im Speicherteil bis zur Nähe der Auswählelektrode (G4) entspricht,

   dadurch gekennzeichnet, daß die Auswählelektrode (G4) in der Nähe des Eingangsteils der Röhre plaziert ist, um die Auswahl eines Elektronenpaketes auf seinem Rückweg zu ermöglichen.

7. Vorrichtung zur zeitweiligen Speicherung und Auswahl nach Anspruch 6, dadurch gekennzeichnet, daß die Auswählelektrode ein für Elektronen transparentes Auswählgitter (G4) ist.

8. Vorrichtung nach Anspruch 7, dadurch gekennzeichnet, daß der Eingangsteil eine Photokathode (PC) umfaßt und daß der Speicherteil folgendes umfaßt:
   - eine Beschleunigungszone zwischen der Photokathode (PC) und dem Auswählgitter (G4), wobei das elektrische Feld in dieser Zone schwach ist und als Beschleuniger für die von der Photokathode abgegebenen Elektronenpakete wirkt, wobei sich die Beschleunigungszone über einen kurzen Weg (D1) von der Photokathode erstreckt,
   - eine Gleitzone, die sich über einen gegenüber der Gesamtlänge der Röhre nicht unerheblichen Weg (D'1) hinter der Beschleunigungszone erstreckt, wobei das elektrische Feld in der Gleitzone etwa Null ist,
   - eine der Gleitzone folgende Verzögerungszone, wobei das elektrische Feld in dieser Zone auf die von der Photokathode abgegebenen Elektronenpakete verzögernd wirkt und sich die Verzögerungszone über einen gegenüber der Röhrenlänge nicht unerheblichen Weg erstreckt.

9. Vorrichtung nach einem der Ansprüche 7 und 8, dadurch gekennzeichnet, daß sie Mittel zum Beaufschlagen des Auswählgitters entweder mit einem dem in der Gleitzone vorherrschenden gleichen Potential oder mit einem negativeren Potential als dem der Photokathode umfaßt und Mittel zum Verringern des Verzögerungsfeldes in der Verzögerungszone, wenn ein ausgewähltes Elektronenpaket diese Zone nach einem Hin und Zurück in der Röhre wieder durchläuft, wobei die Verringerung des Feldes dazu ausreicht, die Bewegung des Elektronenpaketes bis zum Ausgangsteil der Röhre zu erlauben.

10. Vorrichtung nach Anspruch 9, dadurch gekennzeichnet, daß der Ausgangsteil ein Ausgangsgitter (G3) umfaßt, dessen Potential zum Verändern des Wertes des elektrischen Feldes in der Verzögerungszone verändert werden kann.

11. Vorrichtung nach einem der Ansprüche 6 bis 9, dadurch gekennzeichnet, daß die Röhre Mittel umfaßt, um den Elektronenpaketen einen Hinweg und einen Rückweg in der Röhre zwischen dem Eingangsteil und der Auswählelektrode aufzuerlegen, wobei diese an einer solchen Stelle in der Röhre plaziert wird, daß die Laufzeit der Elektronen zum Bewirken eines Hin- und Rücklaufes von der Photokathode bis zum Auswählgitter für unterschiedliche Emissionsenergien der Elektronen von der Photokathode aus innerhalb des Bereiches möglicher Emissionsenergien der Photokathode etwa gleich ist.

# FIG_1

SEQ

Vpc    Vg1        Vg1   Vg2   Ves

E1

12    14    CM

PC   G1         G'1   G2   ES

D'1

D1

# FIG_2

SELECTION PAR G2

EMISSION

IMAGE
SELECTIONNEE

REPULSION

EVACUATION

IMAGES REFLECHIES

EP 0 340 084 B1

FIG_3

FIG_4

EMISSION

ALLER

REFLEXION
PAR G3

SELECTION PAR G4

RETOUR

EVACUATION

AUTORISATION
DE PASSAGE
PAR G3

IMAGE UNIQUE SELECTIONNEE

DETECTION
PAR ES

EP 0 340 084 B1

FIG_5

EP 0 340 084 B1